# EUROPEAN PATENT APPLICATION

(11) **EP 1 431 684 A1**
(43) Date of publication of application: **23.06.2004**
(21) Application number: 03028569.6
(22) Date of filing: 11.12.2003
(51) Int. Cl.: F25B 9/00, F25B 5/04, C09K 5/04

(54) **Non-azeotropic refrigerant mixture, refrigerating cycle and refrigerating device**

(30) Priority: 20.12.2002 JP 2002369431
(71) Applicant: Sanyo Electric Co., Ltd., Keihan, Moriguchi-shi, Osaka (JP)
(72) Inventor: Kamimura, Ichiro, Nitta-gun Gunma 379-2311 (JP); Tsuda, Noriyuki, Ora-Gun Gunma-ken (JP); Matsumoto, Kenzo, Ora-Gun Gunma-Ken (JP); Kawabata, Toru, Ora-Gun Gunma (JP); Watanabe, Masato, Ora-gun Gunma (JP); Yoshizawa, Takashi, Ota-Shi Gunma (JP); Mukaiyama, Hiroshi, Ora-Gun Gunma (JP); Kubo, Ryoko, Ora-Gun Gunma (JP)
(74) Representative: Becker Kurig Straus

(57) **Abstract**

A safe refrigerant mixture having a good coefficient of performance is provided, and a refrigerating cycle and a refrigerating device in which the non-azeotropic refrigerant mixture is circulated are also provided. The non-azeotropic refrigerant mixture comprises carbon dioxide and at least one kind of combustible refrigerants, and has a temperature glide. The refrigerating cycle, in which a compressor, a heat radiator, an expansion mechanism and an evaporator are connected by a refrigerant path, is characterized in that the above non-azeotropic refrigerant mixture is circuited in the refrigerating cycle. In addition, a refrigerating device comprises the above refrigerating cycle and a plurality of the evaporators, wherein an evaporator for use in a low temperature and an evaporator for use in a high temperature higher than the low temperature are arranged in series.

## Description

### CROSS-REFERENCE TO RELATED APPLICATION

This application claims the priority benefit of Japanese application serial no. 2002-369431, filed on December 20, 2002.

### BACKGROUND OF THE INVENTION

### Field of the Invention:

The invention relates in general to a refrigerant, a refrigerating cycle and a refrigerating device. More specifically, the invention relates to a non-azeotropic refrigerant mixture that is mixed with a combustible refrigerant including carbon dioxide and at least one kind of hydrocarbons, a refrigerating cycle using the non-azeotropic refrigerant mixture, and a refrigerating device using the non-azeotropic refrigerant mixture.

### Description of Related Art:

In refrigerating machines of refrigerators, vending machines and show cases, etc., chloroflurocarbon refrigerant, such as dichlorofluoromethane (CFC-12), or hydrochlorofluorocarbon refrigerant, such as chlorodifluoromethane (HCFC-22), is widely used in the conventional art. There is a problem of destroying the ozone layer as as if such refrigerant is released to the atmosphere and then reaches the ozone layer above the earth. Therefore, the chlorofluorocarbon freon and the hydrochlorofluorocarbon freon, which are refrigerants still used in the refrigerating machines, are forbidden or restricted. Therefore, for replacing the above refrigerant freon, hydrofluorocarbon refrigerants, such as CH₂FCF₃ (HFC-134a) is used. However, the influence hydrofluorocarbon refrigerants to the global warming is another important issue of the earth environmental problems, even the HFC refrigerant have the same degree of risk as the HCFC-22 (CHFCIF₂) of the conventional HCFC refrigerant.

In order to avoid these problems, using hydrocarbon (HC) refrigerant, such as propane and isobutene, etc., as the refrigerant of the refrigerating device has been practiced. However, since the HC refrigerant is combustible, dangers of fire or explosion might occur when the HC refrigerant leaks from the refrigerating circuit. In particularly, for a household refrigerator, since it is always stored near various heating sources, leakage of the combustible refrigerant could cause serious accidents.

On the other hand, the use of carbon dioxide is proposed as a refrigerant of the refrigerating device has been proposed by, for example, a Japanese Laid Open Publication Nos. 2002-106989 and 2002-188872. The use of carbon dioxide is desirable because its modulus of rupture for ozone is zero and the warming coefficient is small, and further more, the carbon dioxide is a non-combustible, safe and inexpensive. However, there is a problem that desired energy consumption efficiency and coefficient of performance (COP) cannot be achieved by simply using carbon dioxide in a refrigerating cycle.

### SUMMARY OF THE INVENTION

According to the foregoing description, at least one object of this invention is to provide a non-azeotropic refrigerant mixture that could achieve a desirable degree of coefficient of performance and is safe for a machine whose evaporation temperature is required to be different from that of a refrigerator, etc. In addition, another object of the invention is to further provide a refrigerating cycle and a refrigerating device, in which the above non-azeotropic refrigerant mixture is circulated.

According to the object(s) mentioned above, the present invention provides a non-azeotropic refrigerant mixture, comprising carbon dioxide and at least one kind of combustible refrigerants, and having a temperature glide. In addition, the present invention provides a non-azeotropic refrigerant mixture, comprising carbon dioxide and at least one kind of hydrocarbons, and having a temperature glide. The present invention also provides a non-azeotropic refrigerant mixture, comprising carbon dioxide and at least one kind of combustible HFC refrigerants, and having a temperature glide.

The present invention further provides a refrigerating cycle, in which a compressor, a heat radiator, an expansion mechanism and an evaporator are connected by a refrigerant path. The refrigerating cycle is characterized in that any one of the above non-azeotropic refrigerant mixtures is circulated in the refrigerating cycle.

The present invention further provides a refrigerating cycle, in which a compressor, a heat radiator, an expansion mechanism and an evaporator are connected by a refrigerant path. The refrigerating cycle is characterized in that any one of the above non-azeotropic refrigerant mixtures is circulated in the refrigerating cycle, and the non-azeotropic refrigerant mixture is subjected a hyper critical state at a high pressure side of the evaporator.

The present invention further provides a refrigerating cycle, in which a compressor, a heat radiator, an expansion mechanism and an evaporator are connected by a refrigerant path. The refrigerating cycle is characterized in that any one of the above non-azeotropic refrigerant mixtures is circulated in the refrigerating cycle, the non-azeotropic refrigerant mixture subjected to a hyper critical state at a high pressure side of the evaporator, and the evaporator is operated at a triple point (-56.6°C) of the carbon dioxide.

In addition, the present invention also provides a refrigerating device. The refrigerating device comprises any one of the above the refrigerating cycles; and a plurality of the evaporators. Among the evaporators, a low temperature evaporator and a high temperature evaporator that can be operated at a temperature higher than that of the low temperature evaporator are arranged in series.

In the above refrigerating device, an auxiliary heat exchanger for performing a heat exchange is arranged between a refrigerant path at the heat radiator side that is formed between an outlet side of the heat radiator and an inlet side of the expansion mechanism, and a refrigerant path at the evaporator side that is formed between an outlet side of the evaporator and an inlet side of the compressor.

### BRIEF DESCRIPTION OF THE DRAWINGS

While the specification concludes with claims particularly pointing out and distinctly claiming the subject matter which is regarded as the invention, the objects and features of the invention and further objects, features and advantages thereof will be better understood from the following description taken in connection with the accompanying drawings.

Fig. 1 shows a relationship between a refrigerant mixing rate and a temperature glide of a non-azeotropic refrigerant mixture.

Fig. 2 shows a relationship between a coefficient of performance and a temperature glide of a non-azeotropic refrigerant mixture.

Fig. 3 is a conceptual diagram showing an exemplary refrigerating cycle of the present invention.

Fig. 4 is a conceptual diagram showing another exemplary refrigerating cycle of the present invention.

### DESCRIPTION OF THE PREFERRED EMBODIMENT

The non-azeotropic refrigerant mixture, the refrigerating cycle and the refrigerating device are described in detail according to the embodiment of the present invention.

### < NON-AZEOTROPIC REFRIGERANT MIXTURE >

The non-azeotropic refrigerant mixture of the present invention comprises carbon dioxide and at least one kind of combustible refrigerants. The combustible refrigerant can be hydrocarbon series combustible refrigerant (such as ethane, propane, propylene, butane, isobutane and pentane, etc.) or HFC series combustible refrigerant (such as R32, R152a, and R14a, etc.) In addition, although the aforementioned refrigerants are combustible, their safety can be improved by mixing with the non-combustible carbon dioxide. HFC (artificial refrigerant, etc.) other than the nature refrigerant, hydrocarbon, can be also mixed with carbon dioxide. However, from the point of environment protection, it is preferable that the non-azeotropic refrigerant mixture is formed only by mixing the carbon dioxide and the nature refrigerant.

In the disclosure, the non-azeotropic refrigerant mixture means that refrigerants with different dew points and boiling points are mixed together. As the non-azeotropic refrigerant mixture is subjected to experience a phase change of evaporation and condensation under a fixed composition and a fixed pressure, a starting temperature and an ending temperature of the evaporation and the condensation are different, and therefore, a temperature difference is created during the phase transition. This temperature difference is a so-called temperature glide.

More specifically, if there is the temperature glide, the temperature increases from the inlet of the evaporator to its outlet during the evaporation. Therefore, for a machine requiring different evaporation temperatures for the refrigeration and the cold storage, such as a refrigerator, a temperature range from the temperature at the beginning of the evaporation to an intermediate temperature between the temperature at the beginning of the evaporation and ending of the evaporation is used for the refrigeration area, and a temperature range from the intermediate temperature to the temperature at the ending of the evaporation is used for the refrigeration area. As a result, the temperature difference during the phase transition can be effectively utilized, and the cycle property can be improved.

According to the aforementioned points, the non-azeotropic refrigerant mixture has the following features; that is, (1) during the process of the evaporation and the condensation, the temperature and the composition of the non-azeotropic refrigerant mixture are changed; (2) the mixing components and the mixing rating can be randomly selected; and (3) the improvement of the cycle property by using the non-azeotropic refrigerant mixture can be improved by utilizing the temperature difference during the phase transition.

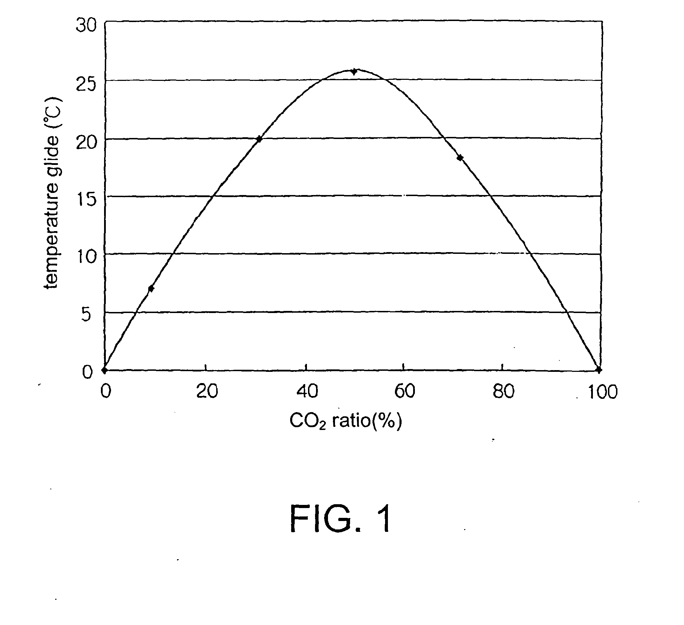

Fig. 1 is an example of a non-azeotropic refrigerant mixture where carbon dioxide and propylene are mixed, and shows a relationship between its mixing ratio and the temperature glide. In addition, Table 1 shows values of other properties, other than the above relationship. From Fig. 1 and Table 1, as the concentration of carbon dioxide increases, the temperature glide increases. When the concentration of carbon dioxide is 50 mass %, the temperature glide reaches its maximum, 25.6°C. As the temperature glide becomes large, it is very effective for a refrigerating cycle requiring a large temperature difference.

**Table 1**

| | CO₂ refrigerant mixing ratio(mass %) | | | | | | R134a |
|---|---|---|---|---|---|---|---|
| | 100 | 70 | 50 | 30 | 10 | 0 R1270 100 mass% | |
| COP | 2.60 | 3.1 | 3.5 | 3.65 | 3.7 | 3.4 | 3.44 |
| condensation pressure (kPa) | 6376 | 4591 | 3340 | 2410 | 1580 | 1156 | 666 |
| evaporation pressure (kPa) | 1426 | 1098 | 767 | 503 | 315 | 212 | 84 |
| Compression ratio | 3.79 | 4.18 | 4.35 | 4.79 | 5.02 | 5.5 | 7.9 |
| discharge temperature (°C) | 91 | 86 | 82 | 76 | 63 | 54 | 46 |
| mass flow (kg/s) | 0.052 | 0.0443 | 0.037 | 0.033 | 0.0322 | 0.033 | 0.0645 |
| mass flow ratio | 1.00 | 0.85 | 0.72 | 0.64 | 0.62 | 0.63 | 1.24 |
| volume flow (m³/s) | 0.0015 | 0.0018 | 0.0023 | 0.0032 | 0.0049 | 0.0075 | 0.0154 |
| volume flow ratio | 1.0 | 1.2 | 1.5 | 2.1 | 3.3 | 5 | 10.3 |
| liquid density (kg/m³) | 735 | 637 | 619 | 586 | 537 | 507 | 1205 |
| liquid density ratio | 1.00 | 0.87 | 0.84 | 0.8 | 0.73 | 0.69 | 1.64 |
| HC fill ratio to R134a | - | 0.16 | 0.26 | 0.34 | 0.4 | 0.42 | 1.00 |
| HC fill ratio to R1270 | - | 0.38 | 0.61 | 0.81 | 0.95 | 1 | - |
| fill among (g), containing HC 150g | - | 398 | 246 | 185 | 157 | 150 | - |
| refrigerating effect (kJ/kg) | 192.4 | 225.8 | 268.9 | 300.4 | 310.6 | 303.1 | 155.1 |
| refrigerating effect ratio | 1.00 | 1.17 | 1.4 | 1.56 | 1.61 | 1.58 | 0.81 |
| density (kg/m³) at the outlet of the expansion valve | 697 | 483 | 511 | 434 | 434 | 423 | 976 |
| temperature glide (°C) | 0 | 18.4 | 25.6 | 20 | 7 | 0 | 0 |
| temperature (°C) at the outlet of the expansion valve | -30 | -34.1 | -38.3 | -36 | -29 | -30 | -30 |
| temperature of saturated gas (°C) | -30 | -15.7 | -12.7 | -16 | -22 | -30 | -30 |

The temperature glide curve in Fig. 1 is not restricted in the non-azeotropic refrigerant mixture of carbon dioxide and propylene, similar curve for a combination of carbon dioxide and other refrigerant can be also observed.

In addition, mixing carbon dioxide with at least one combustible refrigerant such as hydrocarbon, etc. can improve the coefficient of performance (hereinafter, COP) in comparison with that only carbon dioxide is used as the refrigerant.

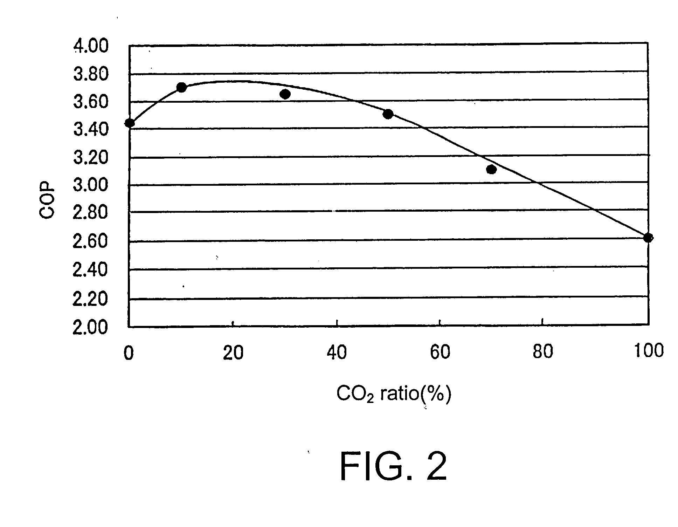

Fig. 2 and the above Table 1 illustrate a relationship between the COP and a mixing ratio of propylene in the non-azeotropic refrigerant mixture of carbon dioxide and propylene.

In Fig. 2, when the refrigerant only contains carbon dioxide, its COP is 2.6. With respect to that case, one can confirm that the COP increases as the mixing ratio of propylene increases. When the mixing ratio of propylene is equal to or above 40 mass %, the COP of the refrigerant mixture has a value same as that of pure propylene refrigerant. In addition, exceeding the above mixing ratio, a COP same as the R134a refrigerant can be achieved (referring to Table 1).

Table 2 shows a comparison of properties, such as the COP, the refrigerating effect, etc. among the non-azeotropic refrigerant mixture of carbon dioxide and propane (CO₂ : R290 = 3 : 7 (mass ratio)), the propane refrigerant and the R134a refrigerant. Similar to the above case of propylene, mixing propane with carbon dioxide can achieve a COP above the COP values of pure carbon dioxide and pure propylene. In consideration of only increasing COP, it is preferable that the mass ratio of carbon dioxide in the non-azeotropic refrigerant mixture is 40 to 90 mass %. In addition, if the increase of COP and the temperature glide are also considered, it is preferable that the mass ratio of carbon dioxide in the non-azeotropic refrigerant mixture is 20 to 80 mass %.

**Table 2**

| | CO2 | CO₂:R290= 3 : 7 (mass ratio) | R290 | R134a |
|---|---|---|---|---|
| COP | 2.60 | 3.65 | 3.38 | 3.44 |
| condensation pressure (kPa) | 6376 | 2342 | 955 | 666 |
| evaporation pressure (kPa) | 1426 | 448 | 168 | 84 |
| Compression ratio | 3.79 | 5.2 | 5.7 | 7.9 |
| discharge temperature (°C) | 91 | 75 | 46 | 46 |
| mass flow (kg/s) | 0.052 | 0.326 | 0.0348 | 0.0645 |
| mass flow ratio | 1.00 | 0.63 | 0.67 | 1.24 |
| volume flow (m³/s) | 0.0015 | 0.0039 | 0.0094 | 0.0154 |
| volume flow ratio | 1.0 | 2.6 | 6.3 | 10.3 |
| liquid density (kg/m³) | 735 | 578 | 492 | 1205 |
| liquid density ratio | 1.00 | 0.79 | 0.67 | 1.64 |
| HC fill ratio to R134a | - | 0.48 | 0.41 | 1.00 |
| HC fill ratio to R290 | - | 0.82 | 1.00 | - |
| fill among (g), containing HC 150g | - | 182 | 150 | - |
| refrigerating effect (kJ/kg) | 192.4 | 306.8 | 287.4 | 155.1 |
| refrigerating effect ratio | 1.00 | 1.60 | 1.49 | 0.81 |
| density (kg/m³) at the outlet of the expansion valve | 697 | 425 | 492 | 976 |
| temperature glide (°C) | 0 | 26 | 0 | 0 |
| temperature (°C) at the outlet of the expansion valve | -30 | -39 | -30 | -30 |
| temperature of saturated gas (°C) | -30 | -13 | -30 | -30 |

The aforementioned properties are not restricted to propylene and propane, and one can infer that mixing combustible refrigerant of such as various hydrocarbon, etc. can achieve such properties. According to these properties, even though a certain amount of carbon dioxide (40 to 90 mass %) is mixed with the combustible refrigerant with a COP higher than carbon dioxide, its COP will not decrease. Therefore, by mixing a refrigerant (such as hydrocarbon) whose amount is previously restricted with carbon dioxide, the non-azeotropic refrigerant mixture is thus applicable to a large system with a high absolute capacity that is not suitable for only using the hydrocarbon refrigerant. In addition, only by adding carbon dioxide, a high COP can be maintained and the combustibility of the combustible refrigerant can be effectively reduced.

### <REFRIGRATING CYCLE AND REFRIGERATING DEVICE>

The refrigerating cycle of the invention is connected by a compressor, a heat radiator, an expansion mechanism and an evaporator. The aforementioned non-azeotropic refrigerant mixture is circulated in the refrigerating cycle.

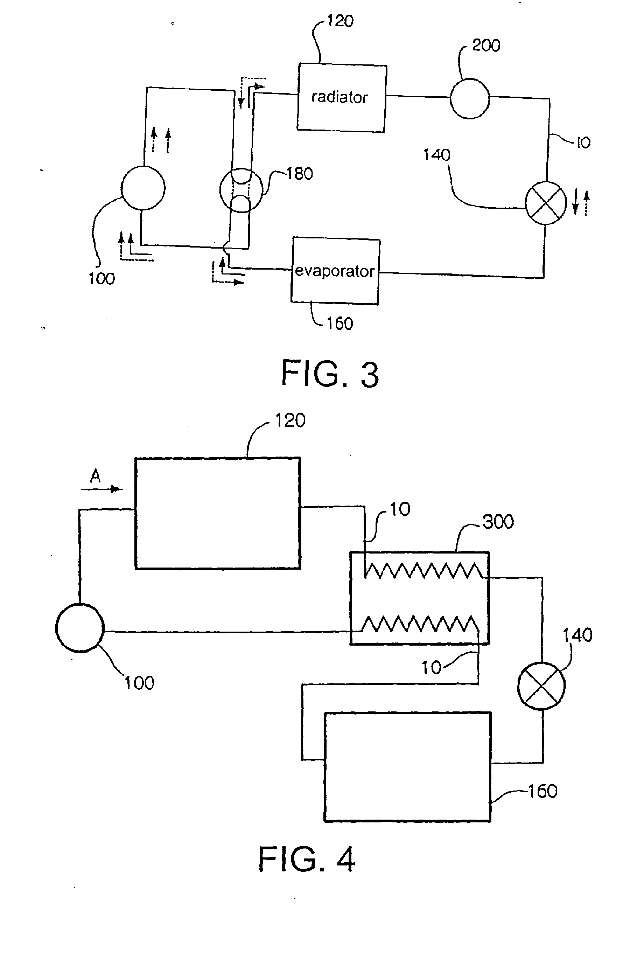

Fig. 3 shows a conceptual diagram of an exemplary refrigerating cycle. As shown in Fig. 3, the refrigerating cycle comprises a compressor 100, a gas cooler 120, an expansion mechanism 140, an evaporator 160, a four-way valve 180 and a drying device 200, all of which are sequentially connected by a refrigerant path (refrigerant pipes) 10 that are depicted by solid lines. Further in Fig. 3, solid and dash arrow signs depict flow directions of the refrigerant, of which the solid arrow shows a case of performing an ordinary cooling process and the dash arrow shows a case of performing a defrosting or heating process. In Fig. 2, the drying device 200 is exemplarily disposed between the expansion mechanism 140 and the gas cooler 120. However, the position of the drying device 200 is not limited thereto, the drying device 200 can be also arranged at a location at the low pressure side depending on the conditions.

In an example of cooling an interior space, a high-temperature and highpressure refrigerant gas, compressed by the compressor 100, passes through the four-way valve 180 and then is cooled by the gas cooler 140, so as to become a low temperature and high pressure refrigerant liquid. The refrigerant liquid is then depressurized by the expansion mechanism 140 (for example, a capillary tube, a temperature-type expansion valve, etc.) and becomes a low-temperature and low-pressure liquid that only contains little gas. The low-temperature and low-pressure liquid then reaches the evaporator 160, absorbs heat from the air in the interior space, and then evaporates. The evaporated liquid passes through the four-way valve 180 again and then reaches the compressor 100. As a result, the interior space is cooled.

In a case that the evaporator is defrosting or heating, the four-way valve 180 is switched such that the refrigerant flows along the path depicted by the dashed arrow signs. The flow direction of the refrigerant is reversed to the direction of the case of performing the cooling process. By switching the flow direction of the refrigerant to a reverse direction, the evaporator 160 and the gas cooler 120 are switched, so that the defrosting and the heating process can be performed.

In the refrigerating cycle of Fig. 3, it is preferable that the non-azeotropic refrigerant mixture is subjected to a hyper critical state at the high pressure side of the evaporator 160. In addition, when non-azeotropic refrigerant mixture is subjected to a hyper critical state at the high pressure side of the evaporator 160, its is preferable to set the evaporator 160 to operate at an evaporation temperature equal to or above -56.6°C, the triple point of carbon dioxide in the non-azeotropic refrigerant mixture.

In the aforementioned refrigerating cycle, if the heat radiator is an outdoor heat exchanger and the evaporator is an indoor heat exchanger, the refrigerating cycle is applicable to a cooling and heating type air-conditioner, but the refrigerating device is preferable. For example, a refrigerating device is preferable for a region requiring a very low temperature (such as the freezing storage compartment) and a region requiring low temperature to certain extent (such as a cold storage compartment), like a household refrigerator. A preferable temperature glide in practice is about 20 to 30°C.

In addition, the refrigerating cycle of the invention can be also applied to a larger refrigerating device, for example, a heat pump unit of carbon dioxide hot-water supply system, a heat pump unit of carbon dioxide hot-water supply and heating machine, a refrigerating cycle of carbon dioxide vending machine, a refrigerating cycle of carbon dioxide refrigerant refrigerating machine.

In a refrigerating device suitable for using the aforementioned refrigerating cycle, among a plurality of evaporators, the evaporators for low temperature use and the evaporators for higher temperature use are preferably arranged in series. For example, in a case of a non-azeotropic refrigerant mixture containing carbon dioxide, most low boiling point refrigerant evaporates at a first evaporator, and a low temperature can be obtained, which is used for refrigeration. Further, most high boiling point refrigerant evaporates at a second evaporator to achieve a higher temperature for cold storage.

The refrigerating cycle in Fig. 3 can be modified as shown in Fig. 4, and the modified refrigerating cycle is also applicable to a refrigerating device. In the refrigerating cycle shown in Fig. 4, when the non-azeotropic refrigerant mixture of the present invention is circulated in the direction of the arrow A, an auxiliary heat exchanger 300 for performing heat exchange is arranged between a refrigerant path 10 at the heat radiator 120 side that is formed between an outlet side of the heat radiator 120 and an inlet side of the expansion mechanism 140, and a refrigerant path 10 at the evaporator 160 side that is formed between an outlet side of the evaporator 160 and an inlet side of the compressor 100. As shown in Fig. 4, the refrigerating effect can be increased by arranging the auxiliary heat exchanger 300 at the position described above.

As described above, a desired temperature can be effectively set by utilizing the temperature glide of the non-azeotropic refrigerant mixture of the present invention. In addition, by arranging a plurality of evaporators in serial, a plurality of expansion valves is not required, so that the cost can be reduced. Furthermore, the pipe arrangement is simplified, the refrigerating control can be also simplified.

In summary, according to the present invention, a safe non-azeotropic refrigerant mixture having a good coefficient of performance can be provided, and by using this non-azeotropic refrigerant mixture, a refrigerating cycle and a refrigerating device having a high coefficient of performance can be provided.

While the present invention has been described with a preferred embodiment, this description is not intended to limit our invention. Various modifications of the embodiment will be apparent to those skilled in the art. It is therefore contemplated that the appended claims will cover any such modifications or embodiments as fall within the true scope of the invention.

## Claims

1. A non-azeotropic refrigerant mixture, **characterized in** comprising a carbon dioxide and at least one kind of combustible refrigerants, and having a temperature glide.

2. The non-azeotropic refrigerant mixture of claim 1, wherein the combustible refrigerants are hydrocarbons.

3. The non-azeotropic refrigerant mixture of claim 1, wherein the combustible refrigerants are combustible HFC refrigerants, and having a temperature glide.

4. A refrigerating cycle, **characterized in that** a compressor (100), a heat radiator (120), an expansion mechanism (140) and an evaporator (160) are connected by a refrigerant path (10), and the non-azeotropic refrigerant mixture of claim 1 is circulated in the refrigerating cycle.

5. A refrigerating cycle, **characterized in that** a compressor (100), a heat radiator (120), an expansion mechanism (140) and an evaporator (160) are connected by a refrigerant path (10), the non-azeotropic refrigerant mixture of claim 1 is circulated in the refrigerating cycle, and the non-azeotropic refrigerant mixture is subjected to a hyper critical state at a high pressure side of the evaporator (160).

6. A refrigerating cycle, **characterized in that** a compressor (100), a heat radiator (120), an expansion mechanism (140) and an evaporator (160) are connected by a refrigerant path (10), the non-azeotropic refrigerant mixture of claim 1 is circulated in the refrigerating cycle, and the non-azeotropic refrigerant mixture is subjected to a hyper critical state at a high pressure side of the evaporator (160), and the evaporator (160) is operated at a triple point temperature, -56.6°C, of the carbon dioxide.

7. A refrigerating device, **characterized in** comprising:
the refrigerating cycle of any one of claims 4-6; and
a plurality of evaporators, wherein a low temperature evaporator and a high temperature evaporator that can be operated at a high temperature higher than that of the low temperature evaporator are arranged in series.

8. The refrigerating device of claim 7, wherein an auxiliary heat exchanger for performing a heat exchange is arranged between a refrigerant path at the heat radiator side that is formed between an outlet side of the heat radiator and an inlet side of the expansion mechanism, and a refrigerant path at the evaporator side that is formed between an outlet side of the evaporator and an inlet side of the compressor.
